# EUROPÄISCHE PATENTSCHRIFT

(11) **EP 3 668 660 B1**
(45) Veröffentlichungstag und Bekanntmachung des Hinweises auf die Patenterteilung: **21.07.2021**
(21) Anmeldenummer: 18758726.6
(22) Anmeldetag: 20.07.2018
(51) Int. Cl.: B08B 9/08, B29C 63/00

(54) **VORRICHTUNG ZUM ENTFERNEN VON ETIKETTEN**
DEVICE FOR REMOVING LABELS
DISPOSITIF POUR ENLEVER DES ÉTIQUETTES

(30) Priorität: 18.08.2017 DE 102017118866
(43) Veröffentlichungstag der Anmeldung: 24.06.2020
(73) Patentinhaber: Stadler Anlagenbau GmbH, 88361 Altshausen (DE)
(72) Erfinder: ROK, Mezic, 8373 Leskovec Pri Krskem (SI)
(74) Vertreter: Otten, Roth, Dobler & Partner mbB Patentanwälte
(86) Internationale Anmeldenummer: PCT/IB2018/055416
(87) Internationale Veröffentlichungsnummer: WO 2019/034947

(56) Entgegenhaltungen:
- EP-A1- 0 267 619
- EP-A1- 2 735 382
- DE-A1- 4 219 051
- JP-A- 2004 025 591
- US-A1- 2010 276 083

## Beschreibung

Die Erfindung betrifft eine Vorrichtung zum Entfernen von Etiketten gemäß Anspruch 1.

Vorrichtungen zum Entfernen von Etiketten von Objekten, z.B. von Kunststoffflaschen, sind aus dem Stand der Technik bereits bekannt. Derart bekannte Vorrichtungen weisen ein Behältnis mit einer Eintrittsöffnung zum Einbringen der Objekte, z.B. Kunststoffflaschen sowie Mittel zum Entfernen von Etiketten, beispielsweise Messer oder Schaber oder dergleichen, auf.

Nachteilig ist hierbei an den aus dem Stand der Technik bekannten Vorrichtungen, insbesondere, dass die Behältnisse der Vorrichtungen und damit die Vorrichtungen an sich in einer horizontalen Richtung, d.h. der Länge nach angeordnet sind, wodurch es erforderlich ist, erheblichen Platz für die Vorrichtung bereitzustellen.

Die JP 2004 025591 A offenbart eine Vorrichtung zum kontinuierlichen, effizienten und ohne Handarbeit möglichen Entfernen von Etiketten von Polyethylenterephthalat(PET)-Flaschen. Diese besteht aus einem vertikalen Doppelzylinder, bestehend aus einem Innen-, sowie Außenzylinder, wobei Auslöseklauen an der Außenwand des Innenzylinders beziehungsweise der Innenwand des Außenzylinders angebracht sind. Innen- und Außenzylinder sind in einem geeigneten Abstand, sowie in reversibel drehbarer Weise installiert. Das Etikett wird durch spiralförmig angeordnete und sich nach unten verjüngenden Entriegelungsklauen an der Außenwand des Innenzylinders gelöst.

Die EP 0 267 619 A1 zeigt eine Vorrichtung zum mechanischen Ablösen von Etiketten, Banderolen, oder Ähnlichem. Das Ablösen erfolgt im trockenen Zustand der Flasche mittels einer Drehbewegung eines Bürstenkörpers. Der Bürstenkörper trägt entlang seiner Umfangsfläche scheibenförmige oder segmentartige Bürstenanordnungen.

Die US 2010/276083 A1 zeigt eine halbautomatische Etikettenentfernungsmaschine von runden Behältnissen. Diese befinden sich zwischen einer drehbaren Spannrolle und einer drehbaren Plattform. Der Behälter wird durch Drehen der Plattform um seine zentrale vertikale Achse gedreht. Mehrere Schälanordnungen werden mit dem Etikett in Kontakt gebracht und dort durch spiralförmiges Abziehen des Etiketts über die Außenfläche des Behälters nach unten bewegt.

Aufgabe der Erfindung ist es, eine verbesserte Vorrichtung zum Entfernen von Etiketten bereitzustellen, die insbesondere besonders kompakt und platzsparend ausgebildet ist.

Die Aufgabe wird durch eine Vorrichtung zum Entfernen von Etiketten nach Anspruch 1 gelöst. Weitere Ausgestaltungen der Erfindung sind Gegenstand der Unteransprüche.

Ausgehend von einer Vorrichtung zum Entfernen von Etiketten von vorzugsweise aus Kunststoff gefertigten Objekten, insbesondere Flaschen, wobei die Vorrichtung zumindest ein Behältnis mit wenigstens einer Eintrittsöffnung zum Einbringen der Objekte, insbesondere Flaschen umfasst und wobei die Vorrichtung Mittel zum Entfernen von Etiketten umfasst und wobei das Behältnis eine Rotationsvorrichtung umfasst, wobei die Rotationsvorrichtung vertikal in dem Behältnis angeordnet ist.

Um eine besonders flexible Vorrichtung bereitstellen zu können, bei der Etiketten auch von Objekten unterschiedlicher Größe und/oder Form effizient entfernt werden können, ist erfindungsgemäß vorgesehen, dass Mittel zum Entfernen von Etiketten, insbesondere Rotormesser, gegenüber weiteren Mitteln zum Entfernen von Etiketten, insbesondere Statormesser, um einen Winkel von etwa 90° entlang ihrer Wirkkanten verdreht angeordnet sind.

Es kann vorgesehen sein, dass Mittel zum Entfernen von Etiketten, insbesondere Rotormesser, gegenüber weiteren Mitteln zum Entfernen von Etiketten, insbesondere Statormesser, um einen Winkel von etwa 90°± 20° entlang ihrer Wirkkanten verdreht angeordnet sind.

Die erfindungsgemäße vertikale Anordnung des Behältnisses bzw. der Rotationsvorrichtung des Behältnisses ermöglicht, dass die Vorrichtung kompakt ausgebildet ist und gegenüber einer Vorrichtung, deren Behältnis bzw. deren Rotationsvorrichtung horizontal angeordnet ist, entsprechend weniger Platz, z.B. zum Betrieb, benötigt.

Um zu ermöglichen, dass Etiketten von Objekten vollständig entfernt werden können, kann in einer besonders bevorzugten Ausgestaltung der Erfindung vorgesehen sein, dass die Mittel zum Entfernen von Etiketten an der Rotationsvorrichtung angeordnet und vorzugsweise als Rotormesser ausgebildet sind, wobei die Rotormesser um eine Schwenkachse schwenkbar sind. Rotierende Rotationsvorrichtungen, insbesondere Rotormesser können zudem aufgrund einer kompakten Ausgestaltung sowie einer günstigen Anordnung in dem Behältnis leicht gewartet bzw. ausgetauscht werden.

Rotierende Mittel zum Entfernen von Etiketten können beispielsweise auch verhindern, dass die Vorrichtung z.B. durch zu große Objekte blockiert und dadurch ggf. beschädigt wird.

Um die Vorrichtung noch effizienter betreiben zu können und um sicherzustellen, dass Etiketten vollständig entfernt werden, kann in einer weiteren bevorzugten Ausgestaltung der Erfindung vorgesehen sein, dass die Vorrichtung weitere Mittel zum Entfernen von Etiketten umfasst, die in einem Innenraum des Behältnisses, vorzugsweise an dessen Mantelfläche umlaufend angeordnet und insbesondere als Statormesser ausgebildet sind.

In einer besonders vorteilhaften Ausgestaltung der Erfindung kann vorgesehen sein, dass zumindest ein Teil der vorzugsweise als Statormesser ausgebildeten weiteren Mittel zum Entfernen von Etiketten drehbeweglich, insbesondere um eine Achse, die senkrecht zu einer Rotationsachse der Rotationsvorrichtung kippbar an dem Behältnis befestigt ist.

Derart flexible angeordnete Statormesser können sich als besonders vorteilhaft erweisen, wenn Objekte, beispielsweise Kunststoffflaschen unterschiedlicher Größe bzw. Form, etc. vorliegen.

Die Erfindung kann in einer weiteren vorteilhaften Ausgestaltung vorsehen, dass wenigstens ein Teil der insbesondere als Rotormesser ausgebildeten Mittel zum Entfernen von Etiketten derart längenverschieblich an der Rotationsvorrichtung angeordnet ist, dass ein Abstand zu einer Innenwandung des Behältnisses und insbesondere zu daran angeordneten vorzugsweise als Statormesser ausgebildeten weiteren Mitteln zum Entfernen von Etiketten veränderbar ist.

Hierdurch kann die Effizienz der Vorrichtung weiter erhöht werden, d.h. es kann ermöglicht werden, dass Etiketten möglichst vollständig entfernt werden können.

Vorteilhafterweise kann die Entfernung von Etiketten von Objekten, beispielsweise Kunststoffflaschen, unterschiedlicher Größen bzw. Ausgestaltungen, etc. erfolgen. Eine solche Vorrichtung ist somit hinsichtlich der Ausgestaltung der Objekte, welche entettiketiert werden sollen, besonders flexibel.

Um eine einfache Bewegung von insbesondere als Rotormesser ausgebildeten Mittel zum Entfernen von Etiketten zu ermöglichen und um damit auch bei Objekten unterschiedlicher Größe und/oder Form auch ein effizientes Entfernen der Etiketten zu ermöglichen, kann in einer weiteren vorteilhaften Weiterbildung vorgesehen sein, dass das Behältnis wenigstens einen mit der Rotationsvorrichtung verbundenen Träger umfasst, welcher zumindest ein Langloch umfasst, an dem wenigstens ein als Rotormesser ausgebildetes Mittel zum Entfernen von Etiketten verschiebbar befestigbar ist.

Eine derartige Ausgestaltung kann auch mit überschaubarem Aufwand nachgerüstet bzw. gewartet werden.

Eine bevorzugte Ausgestaltung der Erfindung kann vorsehen, dass das Behältnis zylinderförmig ausgebildet ist und die wenigstens eine Eintrittsöffnung in einem oberen Bereich, insbesondere in einem Bereich einer Deckfläche angeordnet ist.

Hierdurch wird eine besonders kompakte Vorrichtung bereitgestellt.

Um eine einfach zu wartende Vorrichtung bereitstellen zu können, die mit hoher Zuverlässigkeit betrieben werden kann, kann eine weitere vorteilhafte Ausgestaltung der Erfindung vorsehen, dass das Behältnis mittels der Rotationsvorrichtung sowie wenigstens eines außerhalb des Behältnisses angeordneten elektrischen Antriebs und eines Kraftübertragungsmittels, insbesondere Riemenantrieb antreibbar insbesondere rotierbar ist.

In einer weiteren vorteilhaften Ausgestaltung der Erfindung kann vorgesehen sein, dass das Behältnis zumindest eine an einer Mantelfläche vorzugsweise in einem unteren Bereich des Behältnisses angeordnete Austrittsöffnung umfasst.

Dies ermöglicht die kompakte Ausgestaltung der Vorrichtung zum Entfernen von Etiketten, wobei diese entfernten Etiketten bzw. die entsprechenden etikettfreien Objekte, z.B. Kunststoffflaschen, besonders einfach und schnell aus dem Behältnis entnommen werden können.

In einer Weiterbildung der Erfindung kann vorgesehen sein, dass die Vorrichtung insbesondere als Rotormesser ausgestaltete Mittel zum Entfernen von Etiketten umfasst, wobei die Mittel Wirkkanten aufweisen, welche parallel zu der Rotationsachse angeordnet sind. Auf diese Weise können Etiketten effizient und vollständig entfernt werden.

In einer Weiterbildung der Erfindung kann vorgesehen sein, dass die Vorrichtung insbesondere als Statormesser ausgestaltete weitere Mittel zum Entfernen von Etiketten umfasst, wobei die weiteren Mittel Wirkkanten aufweisen, welche in dem Behältnis radial umlaufend angeordnet sind. Dies stellt eine weitere Möglichkeit dar, Etiketten effizient und vollständig zu entfernen.

In einer weiteren vorteilhaften Ausgestaltung kann die Erfindung vorsehen, dass Mittel zum Entfernen von Etiketten, insbesondere Rotormesser, bezogen auf eine Rotationsachse der Rotationsvorrichtung wendelförmig angeordnet sind.

Dies erlaubt eine kompakte Anordnung der Mittel zum Entfernen von Etiketten und somit auch eine entsprechend kompakte Ausgestaltung der Vorrichtung.

Im Sinne der Erfindung ist unter einem Mittel zum Entfernen von Etiketten beispielsweise ein flächiges Schneidmittel mit einer länglichen Wirkkante oder ein flächiges Abtrennmittel mit einer länglichen Wirkkante zu verstehen. Ein solches flächiges Schneidmittel, Abtrennmittel oder dergleichen kann beispielsweise als Klinge, Messer, Schaber, Reibfläche, etc. aufgefasst werden.

Nachstehend wird die Erfindung anhand von Zeichnungen näher erläutert. Hierbei zeigt:
- Figur 1:: eine schematische Darstellung einer erfindungsgemäßen Vorrichtung;
- Figur 2:: eine Schnittansicht der in Figur 1 gezeigten erfindungsgemäßen Vorrichtung;
- Figur 3:: einen detaillierten Ausschnitt aus der in Figur 2 gezeigten erfindungsgemäßen Vorrichtung;
- Figur 4:: die in Figur 1 gezeigte erfindungsgemäße Vorrichtung in einer weiteren Seitenansicht.

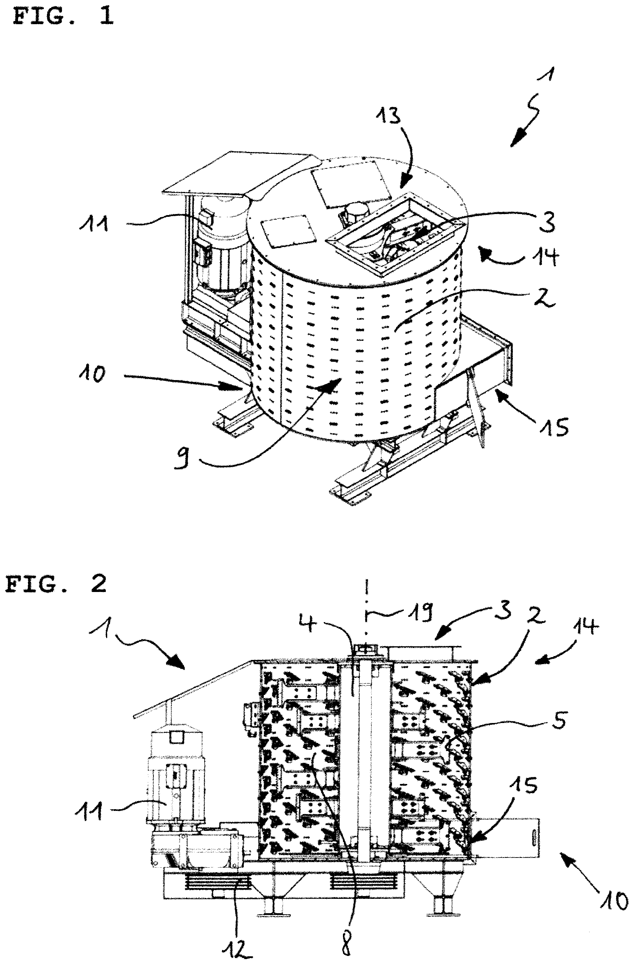

In der Figur 1 ist eine Vorrichtung 1 zum Entfernen von Etiketten von Objekten, insbesondere Kunststoffflaschen, schematisch dargestellt.

Es ist in der Figur 1 gezeigt, dass die Vorrichtung 1 ein Behältnis 2 mit einer Eintrittsöffnung 3 zum Einbringen der Objekte umfasst. Das Behältnis 2 ist im Sinne einer besonders kompakten Ausgestaltung der Vorrichtung 1 zylinderförmig ausgebildet. Eine Eintrittsöffnung 3 zum Einbringen von Objekten, von denen Etiketten entfernt werden sollen, ist in einem oberen Bereich 14, vorliegend in einem Bereich der Deckfläche 13 angeordnet. Das Behältnis 2 wird mittels einer Rotationsvorrichtung (siehe Figur 2) sowie eines außerhalb des Behältnisses 2 angeordneten elektrischen Antriebs 11 und eines Kraftübertragungsmittels 12, vorliegend Riemenantrieb, angetrieben.

In der Figur 1 ist gezeigt, dass das Behältnis 2 eine an einer Mantelfläche 9 in einem unteren Bereich 10 des Behältnisses 2 angeordnete Austrittsöffnung 15 umfasst. An dieser Position können z.B. entfernte Etiketten bzw. etikettfreie Objekte aus dem Behältnis 2 entnommen werden.

Aus der Figur 2 ist ersichtlich, dass die Vorrichtung 1 eine Rotationsvorrichtung 4 umfasst, wobei die Rotationsvorrichtung 4 erfindungsgemäß vertikal in dem Behältnis 2 angeordnet ist. Hierdurch kann eine besonders kompakte und platzsparende Vorrichtung 1 bereitgestellt werden.

Es ist aus der Figur 2 auch ersichtlich, dass die Vorrichtung 1 Mittel 5 zum Entfernen von Etiketten umfasst, wobei die Mittel 5 an der Rotationsvorrichtung 4 angeordnet sind. Diese Mittel 5 sind als Rotormesser ausgebildet. Diese Rotormesser sind um eine Schwenkachse 6 schwenkbar, wodurch die Entfernung von Etiketten besonders effizient und vollständig erfolgen kann.

Die Vorrichtung 1 umfasst weitere Mittel 7 zum Entfernen von Etiketten, welche als Statormesser ausgebildet sind. Diese Statormesser sind im Innenraum 8 des Behältnisses 2 an dessen Mantelfläche 9 umlaufend angeordnet. Die Statormesser sind drehbeweglich um eine Achse, die senkrecht zu einer Rotationsachse 19 (siehe Figur 2) der Rotationsvorrichtung kippbar an dem Behältnis 2 befestigt.

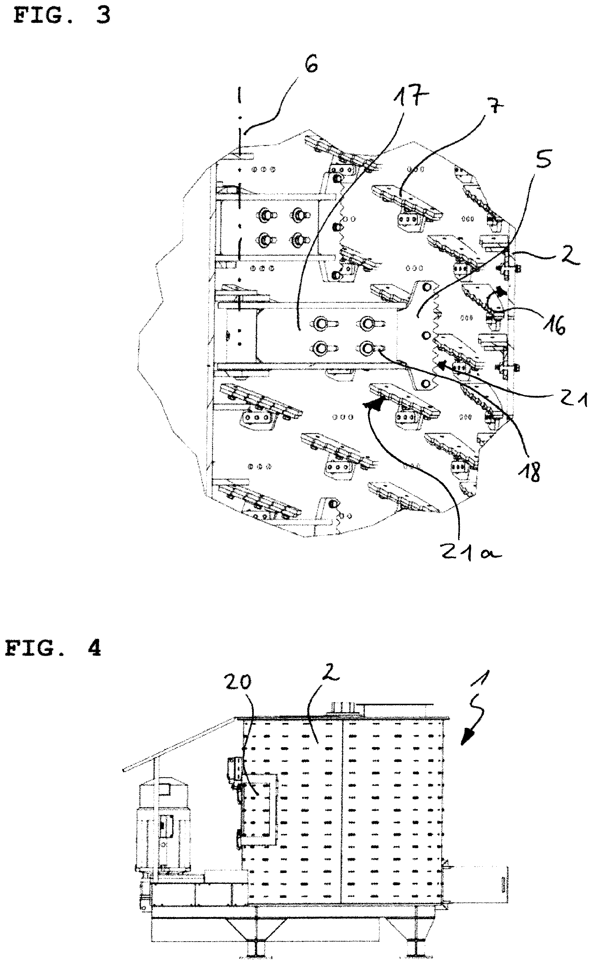

Es ist aus der Figur 3 ersichtlich, dass Mittel 5, d.h. Rotormesser, zum Entfernen von Etiketten längenverschieblich an der Rotationsvorrichtung angeordnet sind, wobei ein Abstand zu einer Innenwandung 16 des Behältnisses 2 und zu daran angeordneten weiteren Mitteln 7, d.h. Statormesser, veränderbar ist. Ferner ist gezeigt, dass das Behältnis 2 einen mit der Rotationsvorrichtung verbundenen Träger 17 umfasst, welcher vorliegend mehrere Langlöcher 18 umfasst, an denen Mittel 5, d.h. Rotormesser, zum Entfernen von Etiketten verschiebbar befestigt sind.

Im gezeigten Ausführungsbeispiel (Figur 3) sind Mittel 5, d.h. Rotormesser gegenüber weiteren Mitteln 7, d.h. Statormesser, um einen Winkel von 90° versetzt angeordnet. Dadurch kann ermöglicht werden, dass Etiketten möglichst vollständig entfernt werden können.

Die relative Versetzung der Mittel 5 zu den weiteren Mitteln 7 kann auch derart aufgefasst werden, dass Mittel 5 zum Entfernen von Etiketten gegenüber weiteren Mitteln 7 zum Entfernen von Etiketten um einen Winkel von etwa 90° entlang ihrer Wirkkanten 21, 21a verdreht angeordnet sind.

Im Ausführungsbeispiel gemäß Figur 3 sind als Rotormesser ausgestaltete Mittel 5 zum Entfernen von Etiketten vorgesehen, wobei die Mittel 5 Wirkkanten 21 aufweisen, welche parallel zu der Rotationsachse 19 angeordnet sind.

Weiterhin sind im Ausführungsbeispiel gemäß Figur 3 als Statormesser ausgestaltete weitere Mittel 7 zum Entfernen von Etiketten vorgesehen, wobei die weiteren Mittel 7 Wirkkanten 21a aufweisen, welche in dem Behältnis 2 radial umlaufend angeordnet sind.

Wirkkanten können auch als Schneidefläche, Schabfläche, Reibefläche, Abtrennfläche, etc. aufgefasst werden.

In der Figur 3 ist weiterhin dargestellt, dass Mittel 5, d.h. Rotormesser bezogen auf eine Rotationsachse der Rotationsvorrichtung wendelförmig in dem Behältnis angeordnet sind. Dies erlaubt eine kompakte Anordnung der Mittel 5 in dem Behältnis 2.

Aus der Figur 4 ist ersichtlich, dass die Vorrichtung 1 im Bereich des Behältnisses 2 eine Serviceöffnung 20 in Form einer Türe umfasst. Hierdurch kann die Vorrichtung 1 einfach gewartet bzw. repartiert werden.

### Bezugszeichenliste:

- 1: Vorrichtung
- 2: Behältnis
- 3: Eintrittsöffnung
- 4: Rotationsvorrichtung
- 5: Mittel (zum Entfernen von Etiketten)
- 6: Schwenkachse
- 7: Mittel (zum Entfernen von Etiketten)
- 8: Innenraum
- 9: Mantelfläche
- 10: Unterer Bereich
- 11: Antrieb
- 12: Kraftübertragungsmittel
- 13: Deckfläche
- 14: Oberer Bereich
- 15: Austrittsöffnung
- 16: Innenwandung
- 17: Träger
- 18: Langloch
- 19: Rotationsachse
- 20: Serviceöffnung
- 21: Wirkkante
- 21a: Wirkkante

## Patentansprüche

1. Vorrichtung (1) zum Entfernen von Etiketten von vorzugsweise aus Kunststoff gefertigten Objekten, insbesondere Flaschen, wobei die Vorrichtung (1) zumindest ein Behältnis (2) mit wenigstens einer Eintrittsöffnung (3) zum Einbringen der Objekte, insbesondere Flaschen umfasst und wobei die Vorrichtung (1) Mittel (5) zum Entfernen von Etiketten umfasst,
**wobei**
das Behältnis (2) eine Rotationsvorrichtung (4) umfasst, wobei die Rotationsvorrichtung (4) vertikal in dem Behältnis (2) angeordnet ist **dadurch gekennzeichnet, dass** Mittel (5) zum Entfernen von Etiketten, insbesondere Rotormesser, gegenüber weiteren Mitteln (7) zum Entfernen von Etiketten, insbesondere Statormesser, um einen Winkel von etwa 90° entlang ihrer Wirkkanten (21, 21a) verdreht angeordnet sind.

2. Vorrichtung nach Anspruch 1, **dadurch gekennzeichnet, dass** die Mittel (5) zum Entfernen von Etiketten an der Rotationsvorrichtung (4) angeordnet und vorzugsweise als Rotormesser ausgebildet sind, wobei die Rotormesser um eine Schwenkachse (6) schwenkbar sind.

3. Vorrichtung nach einem der vorangehenden Ansprüche, **dadurch gekennzeichnet, dass** die Vorrichtung (1) weitere Mittel (7) zum Entfernen von Etiketten umfasst, die in einem Innenraum (8) des Behältnisses (2), vorzugsweise an dessen Mantelfläche (9) umlaufend angeordnet und insbesondere als Statormesser ausgebildet sind.

4. Vorrichtung nach Anspruch 3, **dadurch gekennzeichnet, dass** zumindest ein Teil der vorzugsweise als Statormesser ausgebildeten weiteren Mittel (7) zum Entfernen von Etiketten drehbeweglich, insbesondere um eine Achse, die senkrecht zu einer Rotationsachse (19) der Rotationsvorrichtung (4) kippbar an dem Behältnis (2) befestigt ist.

5. Vorrichtung nach einem der vorangehenden Ansprüche, **dadurch gekennzeichnet, dass** wenigstens ein Teil der insbesondere als Rotormesser ausgebildeten Mittel (5) zum Entfernen von Etiketten derart längenverschieblich an der Rotationsvorrichtung (4) angeordnet ist, dass ein Abstand zu einer Innenwandung (16) des Behältnisses (2) und insbesondere zu daran angeordneten vorzugsweise als Statormesser ausgebildeten weiteren Mitteln (7) zum Entfernen von Etiketten veränderbar ist.

6. Vorrichtung nach einem der vorangehenden Ansprüche, **dadurch gekennzeichnet, dass** das Behältnis (2) wenigstens einen mit der Rotationsvorrichtung (4) verbundenen Träger (17) umfasst, welcher zumindest ein Langloch (18) umfasst, an dem wenigstens ein als Rotormesser ausgebildetes Mittel (5) zum Entfernen von Etiketten verschiebbar befestigbar ist.

7. Vorrichtung nach einem der vorangehenden Ansprüche, **dadurch gekennzeichnet, dass** das Behältnis (2) zylinderförmig ausgebildet ist und die wenigstens eine Eintrittsöffnung (3) in einem oberen Bereich (14), insbesondere in einem Bereich einer Deckfläche (13) angeordnet ist.

8. Vorrichtung nach einem der vorangehenden Ansprüche, **dadurch gekennzeichnet, dass** das Behältnis (2) mittels der Rotationsvorrichtung (4) sowie wenigstens eines außerhalb des Behältnisses (2) angeordneten elektrischen Antriebs (11) und eines Kraftübertragungsmittels (12), insbesondere Riemenantrieb antreibbar insbesondere rotierbar ist.

9. Vorrichtung nach einem der vorangehenden Ansprüche, **dadurch gekennzeichnet, dass** das Behältnis (2) zumindest eine an einer Mantelfläche (9) vorzugsweise in einem unteren Bereich (10) des Behältnisses (2) angeordnete Austrittsöffnung (15) umfasst.

10. Vorrichtung nach einem der vorangehenden Ansprüche, **dadurch gekennzeichnet, dass** die Vorrichtung insbesondere als Rotormesser ausgestaltete Mittel (5) zum Entfernen von Etiketten umfasst, wobei die Mittel (5) Wirkkanten (21) aufweisen, welche parallel zu der Rotationsachse (19) angeordnet sind.

11. Vorrichtung nach einem der vorangehenden Ansprüche, **dadurch gekennzeichnet, dass** die Vorrichtung insbesondere als Statormesser ausgestaltete weitere Mittel (7) zum Entfernen von Etiketten umfasst, wobei die weiteren Mittel (7) Wirkkanten (21a) aufweisen, welche in dem Behältnis (2) radial umlaufend angeordnet sind.

12. Vorrichtung nach einem der vorangehenden Ansprüche, **dadurch gekennzeichnet, dass** Mittel (5) zum Entfernen von Etiketten, insbesondere Rotormesser, bezogen auf eine Rotationsachse (19) der Rotationsvorrichtung (4) wendelförmig angeordnet sind.

## Claims

1. A device (1) for removing labels from objects, preferably objects made of plastic, in particular bottles, wherein the device (1) comprises at least one container (2) with at least one inlet opening (3) for introducing the objects, in particular the bottles, and wherein the device (1) comprises means (5) for removing labels,
wherein
the container (2) comprises a rotation device (4), wherein the rotation device (4) is arranged vertically in the container (2), **characterized in that** means (5) for removing labels, in particular rotor blades, are arranged such that they are rotated by an angle of about 90° along their edges (21, 21a) relative to other means (7) for removing labels, in particular stator blades.

2. The device according to claim 1, **characterized in that** the means (5) for removing labels are arranged at the rotation device (4) and are preferably designed as rotor blades, wherein the rotor blades are pivotable about a pivot axis (6).

3. The device according to any one of the preceding claims, **characterized in that** the device (1) comprises further means (7) for removing labels, which are arranged in an interior (8) of the container (2), preferably circumferentially at its lateral surface (9), and in particular are designed as stator blades.

4. The device according to claim 3, **characterized in that** at least a portion of the further means (7) for removing labels, which preferably are designed as stator blades, is rotatable, in particular rotatable about an axle which is tiltable and which is attached to the container (2) perpendicular to a rotational axis (19) of the rotation device (4).

5. The device according to any one of the preceding claims, **characterized in that** at least a portion of the means (5) for removing labels, which in particular are designed as rotor blades, is arranged displaceably in a longitudinal direction on the rotation device (4) in such a manner that a distance to an inner wall (16) of the container (2) and in particular to the further means (7) for removing labels, which are arranged on the same and which preferably are designed as stator blades, can be changed.

6. The device according to any one of the preceding claims, **characterized in that** the container (2) comprises at least one carrier (17) connected to the rotation device (4), which carrier (17) comprises at least one slotted hole (18) onto which at least one means (5) for removing labels designed as rotor blades can be fastened displaceably.

7. The device according to any one of the preceding claims, **characterized in that** the container (2) is designed in a cylindrical shape and the at least one inlet opening (3) is arranged in an upper region (14), in particular in a region of a top surface (13).

8. The device according to any one of the preceding claims, **characterized in that** the container (2) can be driven, in particular can be rotated, by means of the rotation device (4) as well as at least one electric drive (11) arranged outside the container (2) and a force transfer means (12), in particular a belt drive.

9. The device according to any one of the preceding claims, **characterized in that** the container (2) comprises at least one outlet opening (15) arranged on a lateral surface (9), preferably one in a lower region (10), of the container (2).

10. The device according to any one of the preceding claims, **characterized in that** the device comprises means (5) for removing labels, which in particular are designed as rotor blades, wherein the means (5) have edges (21) which are arranged parallel to the rotational axis (19).

11. The device according to any one of the preceding claims, **characterized in that** the device comprises further means (7) for removing labels, which in particular are designed as stator blades, wherein the further means (7) have edges (21a) which are arranged circumferentially in the radial direction in the container (2).

12. The device according to any one of the preceding claims, **characterized in that** means (5) for removing labels, in particular rotor blades, are arranged helically relative to a rotational axis (19) of the rotation device (4).

## Revendications

1. Dispositif (1) pour enlever des étiquettes d'objets fabriqués de préférence en plastique, en particulier de bouteilles, dans lequel le dispositif (1) comprend au moins un récipient (2) avec au moins une ouverture d'entrée (3) pour l'introduction des objets, en particulier de bouteilles et dans lequel le dispositif (1) comprend des moyens (5) pour enlever des étiquettes,
dans lequel
le récipient (2) comprend un dispositif de rotation (4), dans lequel le dispositif de rotation (4) est agencé verticalement dans le récipient (2) **caractérisé en ce que** des moyens (5) pour enlever des étiquettes, en particulier des lames de rotor, sont agencés par rapport à d'autres moyens (7) pour enlever des étiquettes, en particulier des lames de stator, tournés d'un angle d'environ 90° le long de leurs bords actifs (21, 21a).

2. Dispositif selon la revendication 1, **caractérisé en ce que** les moyens (5) pour enlever des étiquettes sont agencés au niveau du dispositif de rotation (4) et réalisés de préférence en tant que lames de rotor, dans lequel les lames de rotor peuvent pivoter autour d'un axe de pivotement (6).

3. Dispositif selon l'une quelconque des revendications précédentes, **caractérisé en ce que** le dispositif (1) comprend d'autres moyens (7) pour enlever des étiquettes, qui sont agencés de manière circonférentielle dans un espace intérieur (8) du récipient (2), de préférence au niveau de sa surface d'enveloppe (9) et réalisés en particulier en tant que lames de stator.

4. Dispositif selon la revendication 3, **caractérisé en ce qu'**au moins une partie des autres moyens (7) pour enlever des étiquettes réalisés de préférence en tant que lames de stator est fixée mobile en rotation, en particulier autour d'un axe, qui perpendiculaire à un axe de rotation (19) du dispositif de rotation (4) de manière à pouvoir basculer sur le récipient (2).

5. Dispositif selon l'une quelconque des revendications précédentes, **caractérisé en ce qu'**au moins une partie des moyens (5) pour enlever des étiquettes réalisés en particulier en tant que lames de rotor est agencée de manière coulissante en longueur au niveau du dispositif de rotation (4) de telle sorte qu'un écart par rapport à une paroi intérieure (16) du récipient (2) et en particulier par rapport à d'autres moyens (7) pour enlever des étiquettes réalisés de préférence en tant que lames de stator qui y sont agencés est modifiable.

6. Dispositif selon l'une quelconque des revendications précédentes, **caractérisé en ce que** le récipient (2) comprend au moins un support (17) relié au dispositif de rotation (4), lequel comprend au moins un trou oblong (18), sur lequel au moins un moyen (5) pour enlever des étiquettes réalisé en tant que lame de rotor peut être fixé de manière coulissante.

7. Dispositif selon l'une quelconque des revendications précédentes, **caractérisé en ce que** le récipient (2) est réalisé de manière cylindrique et l'au moins une ouverture d'entrée (3) est agencée dans une zone supérieure (14), en particulier dans une zone d'une surface de recouvrement (13).

8. Dispositif selon l'une quelconque des revendications précédentes, **caractérisé en ce que** le récipient (2) peut être entraîné, en particulier mis en rotation au moyen du dispositif de rotation (4) ainsi que d'au moins un entraînement électrique (11) agencé à l'extérieur du récipient (2) et d'un moyen de transmission de force (12), en particulier entraînement par courroie.

9. Dispositif selon l'une quelconque des revendications précédentes, **caractérisé en ce que** le récipient (2) comprend au moins une ouverture de sortie (15) agencée au niveau d'une surface d'enveloppe (9) de préférence dans une zone inférieure (10) du récipient (2).

10. Dispositif selon l'une quelconque des revendications précédentes, **caractérisé en ce que** le dispositif comprend des moyens (5) pour enlever des étiquettes réalisés en particulier en tant que lames de rotor, dans lequel les moyens (5) présentent des bords actifs (21), lesquels sont agencés parallèlement à l'axe de rotation (19).

11. Dispositif selon l'une quelconque des revendications précédentes, **caractérisé en ce que** le dispositif comprend d'autres moyens (7) pour enlever des étiquettes réalisés en particulier en tant que lames de stator, dans lequel les autres moyens (7) présentent des bords actifs (21a), lesquels sont agencés dans le récipient (2) de manière radialement circonférentielle.

12. Dispositif selon l'une quelconque des revendications précédentes, **caractérisé en ce que** des moyens (5) pour enlever des étiquettes, en particulier des lames de rotor, sont agencés de manière hélicoïdale par rapport à un axe de rotation (19) du dispositif de rotation (4).
